## Europäisches Patentamt

## European Patent Office

## Office européen des brevets

(19)

(11) Veröffentlichungsnummer : **0 012 813**
**B1**

(12)

# EUROPÄISCHE PATENTSCHRIFT

(45) Veröffentlichungstag der Patentschrift :
02.12.81

(21) Anmeldenummer : 79104208.8

(22) Anmeldetag : 30.10.79

(51) Int. Cl.³ : **A 23 B   9/00, A 23 L   1/22**

(54) Verfahren zur Sterilisation von Gewürzen.

(30) Priorität : 29.12.78 CH 13275/78

(43) Veröffentlichungstag der Anmeldung :
09.07.80 (Patentblatt 80/14)

(45) Bekanntmachung des Hinweises auf die Patenterteilung : 02.12.81 Patentblatt 81/48

(84) Benannte Vertragsstaaten :
CH DE FR GB NL

(56) Entgegenhaltungen :
CH - A - 293 167
FR - A - 1 555 513
FR - A - 1 557 088
FR - A - 1 576 299
FR - A - 2 137 172
FR - A - 2 143 438
FR - A - 2 242 937
FR - A - 2 245 297
FR - A - 2 266 122
FR - A - 2 285 181
FR - A - 2 290 163
FR - A - 2 324 242
LU - A - 71 446
US - A - 2 391 929
US - A - 3 058 833
US - A - 3 159 494
US - A - 3 183 099
US - A - 3 711 296
US - A - 3 895 121

(73) Patentinhaber : L. Givaudan & Cie Société Anonyme
Patentdienst Postfach
CH-4002 Basel (CH)

(72) Erfinder : Gremli, Hans, Dr.
Gloriastrasse 76
CH-8044 Zürich (CH)
Erfinder : Mor, Juan-Ramon, Dr.
Buchholzstrasse 11
CH-8053 Zürich (CH)

(74) Vertreter : Aschert, Hubert et al
Postfach 601 Grenzacherstrasse 124
CH-4002 Basel (CH)

Imprimerie Jouve, 17, rue du Louvre, 75001 Paris, France

## Verfahren zur Sterilisation von Gewürzen

Die vorliegende Erfindung betrifft ein neues Verfahren zur Sterilisation von Gewürzen. Dieses Verfahren ist dadurch gekennzeichnet, dass man die durch Mikroorganismen kontaminierten, zu sterilisierenden Gewürze Scherkräften aussetzt, die zur Abtötung der Mikroorganismen (insbesondere Bakterien, Pilze, Protozoen), nämlich Scherkräften von mindestens 2 000 Newton, vorzugsweise solche von 2 000-7 000 Newton, insbesondere solche von 3 000-7 000 Newton.

Die zu sterilisierenden Gewürze werden als Festkörper, in rieselfähigem Zustand (Partikel sollen also nicht zusammenbacken), also vorzugsweise in im wesentlichen trockenem Zustand, eingesetzt. Unter « wesentlich trocken » wird verstanden, dass der Feuchtigkeitsgehalt so niedrig sein soll, dass sich das Material « trocken anfühlt ». Der maximale Wassergehalt wird dementsprechend meistens $\leqslant 15\%$ betragen.

Die Gewürze können als Gewürzpartikel, z.B. Körner, Schoten, Flocken, Blattpartikel etc. oder in gemahlener Form vorliegen. Die Teilchengrösse ist nicht kritisch. Sie soll jedoch einen Durchmesser von 0,05 mm nicht unterschreiten.

Die Gewürze werden vorzugsweise « unverdünnt », d.h. im wesentlichen trägerfrei eingesetzt.

Als Gewürze kommen alle Gewürze beziehungsweise Gemische von Gewürzen in Frage, die im rieselfähigen Zustand verfügbar sind, also z.B.

Frucht-Gewürze (Pfeffer, Paprika, Wacholder, etc.)
Dolden-Gewürze (Kümmel, Anis, Koriander, Fenchel, etc.)
Samen-Gewürze (Senf, Muskat, Kardamon, Kakao, etc.)
Blüten-Gewürze (Nelken, Kapern, Safran, Vanille, etc.)
Wurzel-Gewürze (Ingwer, Kurkuma, Sellerie, etc.)
Zwiebel-Gewürze (Knoblauch, Zwiebel, etc.)
Rinden-Gewürze (Zimt)
Blatt- und Krautgewürze (Thymian, Origanum, Salbei, Rosmarin, Majoran, Lorbeer, Petersilie, Bohnenkraut, Liebstöckel, Dill, Estragon, etc.)

Im Rahmen der vorliegenden Erfindung sind unter dem Begriff « Gewürze » native Gewürze zu verstehen, d.h. also Gewürze, welche im wesentlichen in der Form vorliegen, wie sie in der Natur vorkommen, wobei sie allenfalls nach der Ernte gereinigt und/oder getrocknet und/oder zerkleinert wurden. Der Begriff « Gewürze » umfasst somit nicht Würzmaterialien, welche durch andere, das native Gewürz wesentlich verändernde Prozesse, z.B. Extraktion oder dgl., erhalten wurden. Gewürze der letzteren Art wurden beispielsweise schon, zusammen mit ganz spezifischen Trägern (bzw. Trägergemischen), nämlich gelatinisierenden Stoffen, einer Extruderbehandlung unterworfen, wobei aber alleiniger Zweck dieser Extruderbehandlung die Formgebung war ; siehe diesbezüglich die FR-2 245 297.

Unter Sterilisation bzw. Abtötung wird verstanden, dass die Gesamtkeimzahl/g Gewürz, die bekanntlich vor der Sterilisation bis $10^8$/g betragen kann, auf die Grössenordnung von $\sim 10^1$/g reduziert wird.

Die Gesamtkeimzahl wird nach an sich bekannten Methoden, siehe z.B. C. H. Collins, P. M. Lyne, Microbiological Methods, Butterworths & Co., Publ. London 1976, bestimmt. Sie wird bekanntlich definiert als die Summe der Zahl der vegetativen, mesophilen (hitzeempfindlichen) Zellen und der Zahl der wenig hitzeempfindlichen Zellen (Sporen). Die Ermittlung erfolgt in üblicher Weise durch Erstellen einer Stammsuspension des Gewürzes, z.B. in physiologischer Kochsalzlösung, zweckmässigerweise unter Zugabe eines Schutzkolloides, z.B. 1 ‰ Pepton, Herstellung von (insbesondere dekadischen) Verdünnungsreihen, Wachsenlassen (z.B. 72 Stunden bei 30 °C) in geeigneten Nährmedien, z.B. in Petrischalen (z.B. auf « Standard Plate Count Agar » [Nährmedium + Agar]) und Auszählen der Keime. Die Ermittlung der Sporenzahl erfolgt analog, jedoch nach Abtöten der vegetativen Keime durch eine Hitzebehandlung (80 °C, 10 Minuten).

Die Scherkraft wird vorzugsweise durch Extruderbehandlung des kontaminierten Gewürzes appliziert. Dazu dienen insbesondere die aus der Kunststoffindustrie und der Lebensmittelverarbeitung bekanntgewordenen Extruder bzw. Schneckenstrangpressen, ausgerüstet mit einer oder mehreren Schnecken. Es wird ein solcher Extruder verwendet, dessen Konstruktionsmerkmale erlauben, die benötigten Scherkräfte zu erzeugen. Dies wird insbesondere durch zunehmenden Durchmesser des Schneckenkernes und/oder zunehmend engere Schneckenwindungen in der Laufrichtung des zu behandelnden Produktes ermöglicht. Auch durch die Wahl enger Düsenquerschnitte kann die Scherkraft erhöht werden.

Die Scherkraft kann in üblicher Weise durch Messung des Drehmomentes an der Welle (z.B. mittels Dehnungsstreifentechnik), durch Messen des Druckes im Extruder oder durch Messen der jeweiligen Motorleistung bestimmt werden.

Der mögliche Temperaturbereich ist sehr breit ; die obere und untere Grenze werden im wesentlichen durch praktische Erwägungen bestimmt.

Arbeiten unterhalb Raumtemperatur bringt keinerlei Vorteile, oberhalb 150° kann Zersetzung oder sogar Verkohlung der Gewürze eintreten.

Die Reaktionszeit (Verweilzeit) kann kurz gehalten werden, sie beträgt beispielsweise 1-120 Sekunden. Ein bevorzugter Bereich ist derjenige von 2-60 Sekunden und ein ganz besonders bevorzugter Bereich derjenige von 15-30 Sekunden.

Die angewandte Scherkraft, die Temperatur und die Reaktionszeit sind naturgemäss voneinander abhängig. Dies kann durch das beiliegende Diagramm veranschaulicht werden, aus welchem leicht ersichtlich ist, dass je höher die Temperatur, umso kürzer die Reaktionszeit und die nötige Scherkraft. Diese letztere wird insbesondere auch aus praktischen (insbesondere apparativen) Erwägungen den Wert von 10'000 Newton (= 10'000 · $10^5$ dyn) kaum je überschreiten.

Das Gebiet rechts der jeweiligen Temperatur/Zeitkurven ist dasjenige der vollständigen Sterilisation.

Die Kurve « keine Scherkraft (z.B. Autoklav) » bezieht sich auf die Sterilisation im Autoklaven ohne Einwirkung einer Scherkraft.

Beispiel 1

Paprikapulver, Qualität edelsüss, wurde in einem Planetenmischer mit Wasser auf 15 % Gesamtfeuchtigkeit gebracht. Das Material wurde hierauf in einem Brabender Laborextruder Typ 20 DN (Brabender OHG, Duisburg, Deutschland) unter folgenden Bedingungen extrudiert :

| | |
|---|---|
| Extrudertemperatur | 100 °C |
| Substrattemperatur . | 95 °C (vor der Düse) |
| Düsentemperatur | 120 °C |
| Schneckendrehzahl | 200 Upm |
| Verweilzeit | 20 Sek. |
| Scherkraft | 4 500 N |
| Zylinderdurchmesser | 20 mm |
| Düsendurchmesser | 3 mm |

Das extrudierte Produkt war krümelig, es wurde im Warmluftschrank auf 6 % Feuchtigkeitsgehalt getrocknet und hierauf in einer Prallstift-Mühle zu einem feinen Pulver gemahlen.

Das Produkt war bezüglich Geschmack und Farbe mit dem Ausgangsmaterial identisch.

| | mesophile Keime | Sporen |
|---|---|---|
| Anfangskeimgehalt | 5 · $10^7$/g | $10^7$/g |
| Endkeimgehalt | < 10/g | < 10/g |

Wurde der gleiche Versuch ohne Düse durchgeführt, so betrug die Scherkraft bloss 800 N. Dieses Produkt wies einen Endkeimgehalt von 1,6 · $10^7$/g (mesophile Keime) bzw. von 7,8 · $10^6$/g (Sporen) auf.

Beispiel 2

Kurkumapulver wurde unter den Bedingungen des Beispiels 1 extrudiert. Die angewandte Scherkraft betrug 5 400 N.

| | mesophile Keime | Sporen |
|---|---|---|
| Anfangskeimgehalt | 6 · $10^7$/g | 8 · $10^5$/g |
| Endkeimgehalt | 10 /g | < 10/g |

Farbe und Geschmack des extrudierten Materials entsprachen denen des Ausgangsmaterials.

Beispiel 3

Gemahlener schwarzer Pfeffer (12 % Feuchtigkeit) wurde in einem Creusot-Loire Zweischnecken-Extruder (Industriemodell) unter folgenden Bedingungen extrudiert :

| | |
|---|---|
| Extrudertemperatur | 90 °C |
| Produkttemperatur | 90 °C |
| Düsentemperatur | 90 °C |
| Schneckendrehzahl | 180 Upm |
| Verweilzeit | 15 Sek. |
| Zylinderdurchmesser | 53 mm |
| Düsendurchmesser | 2 mm |
| Scherkraft | ~ 3 000 N |

Das plastifizierte Produkt wurde auf 7 % Feuchtigkeit getrocknet und gemahlen. Geschmack und

Schärfe blieben unverändert.

|  | mesophile Keime | Sporen |
|---|---|---|
| Anfangskeimgehalt | $6 \cdot 10^8$/g | $3,5 \cdot 10^8$/g |
| Endkeimgehalt | $10^2$/g | < 10/g |

## Beispiel 4

Origano, fein geschnitten (12 % Feuchtigkeit) wurde unter den Bedingungen des Beispiels 3 extrudiert. Das plastifizierte Produkt wurde auf 6 % Feuchtigkeit getrocknet und gemahlen.

|  | mesophile Keime | Sporen |
|---|---|---|
| Anfangskeimgehalt | $1,3 \cdot 10^6$/g | $2 \cdot 10^5$/g |
| Endkeimgehalt | < 10/g | < 10/g |

Es wurde Geschmacksverbesserung festgestellt.

## Beispiel 5

Extrahierte Vanilleschoten (8 % Feuchtigkeit) wurden in einem Brabender Laborextruder Typ 20 DN unter folgenden Bedingungen extrudiert :

| Extrudertemperatur | 110 °C |
|---|---|
| Produkttemperatur | 108 °C |
| Düsentemperatur | 110 °C |
| Schneckendrehzahl | 140 Upm |
| Verweilzeit | 25 Sek. |
| Scherkraft | 3 900 N |
| Zylinderdurchmesser | 20 mm |
| Düsendurchmesser | 3 mm |

Die extrudierten Schoten wurden direkt gemahlen, der Wassergehalt betrug 6 %.

|  | mesophile Keime | Sporen |
|---|---|---|
| Anfangskeimgehalt | $10^6$/g | $5 \cdot 10^5$/g |
| Endkeimgehalt | < 10/g | < 10/g |

## Beispiel 6

Kakaoschalen (7 % Feuchtigkeit) wurden im Brabender Laborextruder unter folgenden Bedingungen extrudiert :

| Extrudertemperatur | 120 °C |
|---|---|
| Produkttemperatur | 122 °C |
| Düsentemperatur | 110 °C |
| Schneckendrehzahl | 200 Upm |
| Verweilzeit | 20 Sek. |
| Scherkraft | 5 900 N |
| Zylinderdurchmesser | 20 mm |
| Düsendurchmesser | 3 mm |

Das krümelige extrudierte Produkt wurde direkt zu einem groben Pulver (Wassergehalt 5 %) vermahlen.
Der Geschmack blieb unverändert.

|  | mesophile Keime | Sporen |
|---|---|---|
| Anfangskeimgehalt | $2,6 \cdot 10^7$/g | $1,7 \cdot 10^6$/g |
| Endkeimgehalt | < 10/g | < 10/g |

## Beispiel 7

Die unten tabellierten Gewürze (in Pulverform) wurden gemäss Verfahren des Beispiels 1 erfolgreich

**0 012 813**

sterilisiert : Die Endkonzentration war in jedem Fall < 10/g

| | mesophile Keimzahl | Sporenzahl |
|---|---|---|
| | im Ausgangsmaterial | |
| Nelken | $1,2 \cdot 10^6/g$ | $2 \cdot 10^4/g$ |
| Rosmarin | $3 \cdot 10^6/g$ | $2,5 \cdot 10^2/g$ |
| Zwiebel | $1,5 \cdot 10^7/g$ | $10^7/g$ |
| Muskatnuss | $2,3 \cdot 10^4/g$ | $2 \cdot 10^4/g$ |
| Zimt | $2,5 \cdot 10^4/g$ | $2 \cdot 10^3/g$ |
| Paprika | $3 \cdot 10^6/g$ | $5 \cdot 10^3/g$ |
| Kurkuma | $6 \cdot 10^7/g$ | $1,4 \cdot 10^7/g$ |
| Curry | $8 \cdot 10^8/g$ | $8,5 \cdot 10^7/g$ |
| Curry Madras, scharf | $7,5 \cdot 10^8/g$ | $9,5 \cdot 10^7/g$ |
| Knoblauch | $9 \cdot 10^5/g$ | $9,7 \cdot 10^4/g$ |
| Schwarzer Pfeffer | $7 \cdot 10^8/g$ | $3,5 \cdot 10^8/g$ |
| Weisser Pfeffer | $9,1 \cdot 10^8/g$ | $5,1 \cdot 10^5/g$ |

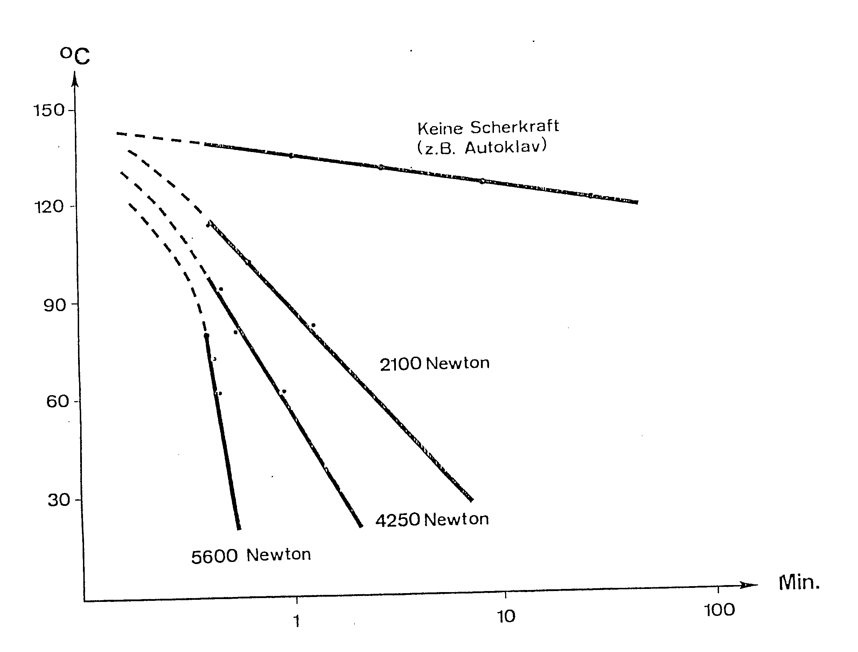

### Ansprüche

1. Verfahren zur Sterilisation von Gewürzen, dadurch gekennzeichnet, dass man die durch Mikroorganismen kontaminierten, zu sterilisierenden Gewürze Scherkräften von mindestens 2 000 Newton aussetzt.

2. Verfahren nach Anspruch 1, dadurch gekennzeichnet, dass die Scherkräfte im Bereich von 2 000-7 000, insbesondere von 3 000-7 000 Newton, liegen.

3. Verfahren nach Anspruch 1 oder 2, dadurch gekennzeichnet, dass man bei Temperaturen von Raumtemperatur bis etwa 150 °C arbeitet.

4. Verfahren nach Anspruch 3, dadurch gekennzeichnet, dass man bei Temperaturen von 90-110 °C arbeitet.

5. Verfahren nach einem der Ansprüche 1-4, dadurch gekennzeichnet, dass man die Scherkräfte 1-120 Sekunden einwirken lässt.

6. Verfahren nach Anspruch 5, dadurch gekennzeichnet, dass man die Scherkräfte 2-60 Sekunden einwirken lässt.

7. Verfahren nach Anspruch 6, dadurch gekennzeichnet, dass man die Scherkräfte 15-30 Sekunden einwirken lässt.

8. Verfahren nach einem der Ansprüche 1-7, dadurch gekennzeichnet, dass man die Scherkräfte mittels Extruderbehandlung appliziert.

### Claims

1. A process for the sterilisation of spices, characterised in that the spices to be sterilised, which are contaminated by microorganisms, are subjected to shearing stresses of at least 2 000 Newton.

2. A process according to claim 1, characterised in that the shearing stresses lie in the range of 2 000-7 000, especially of 3 000-7 000, Newton.

3. A process according to claim 1 or 2, characterised in that the shearing stresses are applied at temperatures of room temperature up to about 150 °C.

4. A process according to claim 3, characterised in that the shearing stresses are applied at temperatures of 90-110 °C.

5. A process according to any one of claims 1-4, characterised in that the shearing stresses are applied for 1-120 seconds.

6. A process according to claim 5, characterised in that the shearing stresses are applied for 2-60 seconds.

7. A process according to claim 6, characterised in that the shearing stresses are applied for 15-30 seconds.

8. A process according to any one of claims 1-7, characterised in that the shearing stresses are applied by means of extruder treatment.

### Revendications

1. Procédé pour stériliser les épices caractérisé en ce que l'on expose les épices à stériliser, contaminées par des microorganismes, à des forces de cisaillement d'au moins 2 000 newtons.

2. Procédé selon la revendication 1, caractérisé en ce que les forces de cisaillement se situent dans l'intervalle de 2 000 à 7 000 et plus spécialement de 3 000 à 7 000 newtons.

3. Procédé selon la revendication 1 ou 2, caractérisé en ce que l'on opère à des températures allant de la température ambiante à 150 °C environ.

4. Procédé selon la revendication 3, caractérisé en ce que l'on opère à des températures de 90 à 110 °C.

5. Procédé selon l'une des revendications 1 à 4, caractérisé en ce que l'on fait agir les forces de cisaillement pendant 1 à 120 secondes.

6. Procédé selon la revendication 5, caractérisé en ce que l'on fait agir les forces de cisaillement pendant 2 à 60 secondes.

7. Procédé selon la revendication 6, caractérisé en ce que l'on fait agir les forces de cisaillement pendant 15 à 30 secondes.

8. Procédé selon l'une des revendications 1 à 7, caractérisé en ce que l'on applique les forces de cisaillement au moyen d'un traitement à l'extrudeuse.